(19) Europäisches Patentamt
European Patent Office
Office européen des brevets

(11) Veröffentlichungsnummer: **0 051 112**
**A1**

(12) **EUROPÄISCHE PATENTANMELDUNG**

(21) Anmeldenummer: **81106059.9**

(22) Anmeldetag: **03.08.81**

(51) Int. Cl.³: **H 01 M 10/39**
H 01 M 10/50

(30) Priorität: **25.10.80 DE 3040394**

(43) Veröffentlichungstag der Anmeldung:
**12.05.82 Patentblatt 82/19**

(84) Benannte Vertragsstaaten:
**AT FR GB NL SE**

(71) Anmelder: **VARTA Batterie Aktiengesellschaft**
**Am Leineufer 51**
**D-3000 Hannover 21(DE)**

(72) Erfinder: **von Alpen, Ulrich, Dr.**
**Im Kastanienhain 5**
**D-6246 Schlossborn(DE)**

(72) Erfinder: **Krauth, Axel, Dr.**
**Oberweissenbach 58**
**D-8672 Selb/Bayern(DE)**

(74) Vertreter: **Kaiser, Dieter Ralf, Dipl.-Ing.**
**Gundelhardtstrasse 72**
**D-6233 Kelkheim/Ts.(DE)**

(54) **Elektrochemische Sekundärzelle.**

(57) In einer elektrochemischen Na/S-Zelle mit geregeltem Wärmehaushalt werden der flüssige Schwefel und die geschmolzenen Zellreaktionsprodukte $Na_2S_X$ zwischen einem Vorratstank (5) und einem zentral angeordneten Reaktionsaggegat (2) in der Form eines von Anoden- und Kathodenräumen (3,4) aufgegliederten Sinter-Hohlblocks im Kreislauf geführt. Die betriebsnotwendigen Temperaturen der Zelle entfallen auf die Bereiche 100–200°C für den Na-Vorratstank (7), 200–300°C für den S, $Na_2S_X$-Vorratstank (5) und 250–350°C für das Reaktionsaggregat (2). Durch spiralig gewickelte Verzögerungsleitungen (8, 10, 11, 12) mit geringem Wärmeleitvermögen werden diese unterschiedlichen Tenperaturniveaus voneinander getrennt. Zusätzlich bilden Strahlungsschilde (1,6) einen inneren und einen äußeren Wärmebehälter, wodurch die Strahlungsverlustleistung des Reaktionsaggregats zum Ausgleich der Wärmebilanz und zum Flüssighalten des Na genutzt werden kann. Auch die Standzeit der Zelle wird durch diese Maßnahmen wesentlich erhöht.

Für die Veröffentlichung ist Figur 1 vorgesehen.

Fig.1

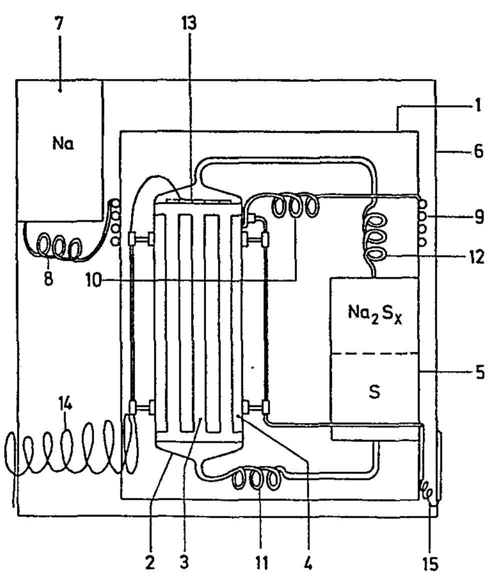


EP 0 051 112 A1

Reg.-Nr. 6 FP 374-EP

6233 Kelkheim, den 28.07.81
EAP-Dr.Ns/sd

VARTA BATTERIE AKTIENGESELLSCHAFT
3000 HANNOVER 21, AM LEINEUFER 51

# Elektrochemische Sekundärzelle

Die Erfindung betrifft eine elektrochemische Sekundärzelle mit flüssiger Natriumanode und flüssiger Schwefelkathode.

Bei der konstruktiven Durchgestaltung von Natrium/Schwefel-Zellen mit dem Ziel einer immer besseren Energieausnutzung dieses vielversprechenden elektrochemischen Systems hat man sich u.a. auch um eine größere Kompaktheit solcher Aggregate bemüht, weil es vor allem wichtig ist, die beiden schmelzflüssigen Aktivmaterialien bei möglichst engem Nebeneinander über oder entlang möglichst ausgedehnten Reaktionsflächen in Wechselwirkung treten zu lassen. In diesem Bestreben kommt der eigentlichen Reaktionskammer als dem Kernstück einer Natrium/Schwefel-Zelle eine übergeordnete Bedeutung zu.

In den meisten Zellen nach dem obigen Gattungsbegriff ist die Natriumanode und die Schwefelkathode jeweils in eine Mehrzahl parallelgeschalteter vertikaler Hohlräume unterteilt.

Aus der DE-PS 25 13 649 ist eine Anordnung bekannt, bei der Parallelscharen anodischer und kathodischer Kanäle einen einheitlichen Festelektrolytkörper vollständig durchdringen, wobei die Anodenräume auf dem einen Ende und die Kathodenräume auf dem entgegengesetzten Ende des Festelektrolytkörpers einseitig geschlossen sind. Die Kanalstrukturen münden, wie bei anderen bekannten Zellen auch, in Ausgleichsräume sowohl für den flüssigen Reaktanden der einen wie für denjenigen der anderen Polarität, die zugleich als Vorratsbehälter dienen. Die Ausgleichsräume zu beiden Enden des Festelektrolytkörpers tragen dem Umstand

Rechnung, daß jeder Lade- und Entladevorgang unter Volumenänderung des flüssigen Aktivmaterials sich vollzieht. Z.B. nimmt während der Entladung gemäß 2 Na + 3/2 $S_2 \longrightarrow Na_2S_3$ der Natriumspiegel in dessen Vorratsbehälter ab, da das Natrium durch die $Na^+$-leitenden Trennwände des Festelektrolytkörpers aus den Anodenräumen aus- und in die Kathodenräume einwandert. Dabei muß eine zu starke Abnahme der vom Natrium kontaktierten Anodenraumfläche, welche durch Graphitierung leitend gemacht ist, vermieden werden. Gleiches gilt für die Kathodenkanäle und deren Ausgleichsraum, aus denen während der Ladung das Natrium verschwindet.

Aus der DE-OS 24 31 152 sind Maßnahmen bekannt, mit denen es möglich ist, die flüssigen Reaktanden stets weitgehend über die Trennwandflächen zu verteilen und dort festzuhalten. Dies wird durch Auskleiden der Kanäle mit kapillaraktiven porösen Deckschichten erreicht.

Mit der vom Standpunkt der Energiedichte her gesehenen günstigen Kompaktanordnung bekannter Natrium/Schwefel-Zellen konnte allerdings der Mangel einer ungenügenden Masseausnutzung sowie eines unausgewogenen Wärmehaushalts immer noch nicht überwunden werden. Der unausgeglichene Wärmehaushalt rührt daher, daß der Betrieb einer solchen Zelle bestimmten Temperaturbedingungen unterworfen ist, die sehr unterschiedlichen thermischen Niveaus entsprechen und nur schwer ausbalanciert werden können. Deshalb müssen in der Regel beträchtliche Wärmeverluste in Kauf genommen werden, weil der Wärmeaustausch zwischen den Temperaturniveaus nicht von selbst in der gewünschten Weise erfolgt.

Die zu berücksichtigenden Temperaturbedingungen sind

1) die Schmelztemperatur des Na: 98°C

2) die Schmelztemperatur der möglichen Kathodensubstanzen bzw. Zellreaktionsprodukte

S: 115°C
$Na_2S_2$: 242°C
$Na_2S_4$: 285°C

3) die Temperatur in der Reaktionskammer: 300 - 350°C.

Der Erfindung liegt somit die Aufgabe zugrunde, eine elektrochemische Sekundärzelle auf der Basis des Systems Natrium/Schwefel anzugeben, die so konstruiert ist, daß die eingespeisten flüssigen Reaktanden für die Stromerzeugung besser genutzt werden können. Ein weiteres Anliegen der Erfindung ist es, Wärmeverluste auf ein Mindestmaß zu reduzieren und im Innenbereich der Zelle eine bessere Temperaturregelung zu schaffen.

Die Aufgabe wird erfindungsgemäß dadurch gelöst, daß der Festelektrolytkörper aus untereinander versinterten profilierten Keramikplatten besteht, die parallel verlaufende Kanäle mit dünnen Zwischenwänden bilden, wobei die Anodenräume am oberen Ende offen und am gegenseitigen Ende geschlossen sind, und die oberen Enden mit Natriumvorrat in Verbindung stehen, und wobei die Kathodenräume am oberen und unteren Ende offen sind und mit einem Vorrat aus Schwefel und den Reaktionsprodukten der Zelle in Verbindung stehen, und daß in die Kathodenräume metallische Ableiter eingelassen sind.

Die Gesamtanordnung der erfindungsgemäßen Sekundärzelle sieht dabei vor, daß eine räumliche Abtrennung der Reaktandenvorräte vom eigentlichen Reaktionsaggregat, nämlich dem Festelektrolytkörper, vorhanden ist, derart, daß Natrium einerseits und der Schwefel andererseits in externen Vorratstanks bei Temperaturen bereitgehalten werden können, die nur wenig oberhalb der jeweiligen Schmelztemperaturen der bevorrateten Substanzen liegen. Zugleich ist der Weg frei für eine Durchströmung des Reaktionsaggregats durch die aktive positive S-Masse im geschlossenen Kreislauf, so daß diese optimal ausgenutzt werden kann. Die Durchströmung kann entweder durch Ausnutzung der Konvektion der

sich bildenden $Na_2S_x$ Verbindungen geschehen oder ev. durch Umpumpen bewerkstelligt werden. Die Viskosität der sich bildenden $Na_2S_x$ Verbindungen nimmt mit der Entladetiefe ab, so daß das Reaktionsprodukt gut abgeleitet werden kann. Außerdem kann die Viskosität durch organische Lösungsmittelzusätze erhöht werden.

Aufgrund der externen Volumenvorgabe gemäß der Erfindung ist es auch möglich, die einzelnen Volumina in Anpassung an die jeweils gebildeten Natriumpolysulfide und damit an den entsprechenden Ladezustand thermisch floaten zu lassen.

Zum Aufheizen der vorgegebenen aktiven Massen bietet sich primär die Joule'sche Verlustleistung im Reaktionsaggregat an.

Weiterhin kann durch Einbeziehung des Na-Tanks in einen die gesamte Anordnung umfassenden Strahlungsschild die Strahlungsverlustleistung des Reaktionsaggregats, die mit der 4. Potenz der Arbeitstemperatur steigt, dazu benutzt werden, um die Schmelztemperatur des Natriums zu halten und die thermische Bilanz auszugleichen. Mit Hilfe dieser Maßnahme gelingt es, die Standzeit der Zelle um etwa das 5-fache derjenigen Zeit zu verlängern, die sich bei ungehinderter Wärmeleitung infolge Fehlens von Zwischentemperatur - Wärmebehältern ergeben würde.

Schließlich bieten die thermischen Zwischenniveaus eine gute Möglichkeit, sowohl die mechanischen Halterungen wie die elektrischen Durchführungen für die Stromableitung thermisch zu entkoppeln, was ebenfalls zur Standzeitverlängerung beiträgt. Dies geschieht erfindungsgemäß in der Weise, daß die einzelnen thermischen Niveaus durch Verzögerungsleitungen voneinander auf Distanz gehalten und so entkoppelt werden. Diese Verzögerungsleitungen bestehen aus zu Spiralen aufgewickelten V4A-Rohren, deren Durchmesser von der Viskosität und deren Länge von dem noch tolerierbaren Wärmefluß abhängt.

Wie aus Tabelle 1 ersichtlich, verhalten sich die thermischen

Leitfähigkeiten der Na- und S-Schmelze bei den entsprechenden Temperaturen wie $10^3$:1 und die Viskositäten wie 100 : 1. Der Wärmefluß zur Na-Schmelze kann also durch eine dünne Kapillare entkoppelt werden, während die S-führende Leitung wegen der niedrigen thermischen Leitfähigkeit und hohen Viskosität einen relativ großen Durchmesser aufnehmen kann.

Dies bedingt jedoch, daß die Stromableitung auf der Na-Seite direkt an der Reaktionskammer vorgenommen wird, da entlang der Na-Kapillare - trotz des niedrigen spezifischen elektrischen Widerstandes von 13 x $10^{-6}\Omega$ - infolge des geringen Leitungsquerschnitts hohe Joule'sche Verlustwärmen auftreten, die ein Durchschmelzen der Kapillare befürchten lassen. Z.B. ergibt sich bei einer 50 cm langen Kapillare mit 0,3 cm Durchmesser und 250 A Strombelastung eine Verlustenergie $I^2R$ von 140 W.

Innerhalb des erwähnten Strahlungsschilds ist die Zelle vorteilhaft mit einem weiteren Strahlungsschild ausgestattet, welcher das Reaktionsaggregat und den S- bzw. $Na_2S_x$-Tank einschließt. Um diesen zweiten Strahlungsschild ist der mittlere Abschnitt der Na-Zuleitung mit einem größeren Leitungsquerschnitt spiralig herumgewickelt. Auf diese Weise wird die vom Na-Tank ausgehende Kapillare bei Übergang in den mittleren Leitungsabschnitt an das Zwischentemperaturniveau des S-Tanks angekoppelt und von diesem nochmals kapillar an das hohe Temperaturniveau der Reaktionskammer angekoppelt bzw. von diesem thermisch entkoppelt.

Der vorliegende Schwefel in flüssiger Form fließt in die Reaktionskammern, die schon beim Sinterprozeß mit Graphitvließ ausgekleidet worden sind. Die Separation des sich bildenden $Na_2S_x$ vom zähflüssigen Schwefel geschieht durch eine an einer Austauschmembran erfolgende Aufheizung mittels Konvektion des um den Faktor 100 gegenüber Schwefel weniger zähen $Na_2S_x$ nach oben aus dem Reaktionsgefäß in den S-Tank. In diesem Tank stellt sich ein Gemisch von Schwefel und $Na_2S_x$ ein, dessen Dichte und

Viskosität mit abnehmendem S-Gehalt abnimmt, d.h. mit zunehmender Entladung wird das $S/Na_2S_x$ Gemisch durch die Viskositäterniedrigung und die Temperaturerhöhung dünnflüssiger.

Figur 1 zeigt schematisch den Gesamtaufbau der erfindungsgemäßen Sekundärzelle.

Figur 2 zeigt eine vorzugsweise Ausführungsform des Reaktionsaggregats.

Nach Figur 1 umfaßt ein innerer Wärmebehälter in Gestalt des Strahlungsschilds 1 aus poliertem V4A-Stahl, der auch vergoldet sein kann, das Reaktionsaggregat 2 mit den kanalartigen Kathodenräumen 3 und Anodenräumen 4, sowie den S-bzw. $Na_2S_x$-Vorratstank 5, während ein Strahlungsschild 6 aus goldplattiertem Kupfer als äußerer Wärmebehälter den Na-Vorratstank 7 neben dem inneren Wärmebehälter zusätzlich aufnimmt. Eine einfachere Anordnung, bei der der S-Vorratstank und das Reaktionsaggregat auf einem Temperaturniveau lägen, könnte sich gegebenenfalls auf den Strahlungsschild 6, der auf das Temperaturniveau des Na-Vorratstanks zu fixieren wäre, beschränken.

Der Schwefelvorratstank, der aus Edelstahl besteht, wird zweckmäßigerweise als Korrosionsschutz mit einer Graphitfolie ausgekleidet. Diese verhindert eine Korrosion des Edelstahls, der in der Natriumpolysulfidschmelze in Lösung gehen könnte, da die Polysulfidschmelze die Graphitfolie nicht benetzt.

Die Na-Zuleitung aus V4A-Stahl setzt sich aus dem thermisch entkoppelnden kapillaren Teil 8, dem spiralig um den Strahlungsschild 1 gewickelten Teil 9 mit größerem Querschnitt und den nochmals thermisch entkoppelnden kapillaren Teil 10 bis zum Anodenrand 4 zusammen. Die das Reaktionsaggregat 2 mit dem S-bzw. $Na_2S_x$-Vorratstank 5 verbindenden Leitungsabschnitte 11 und 12 aus V4A-Stahl führen das flüssige Kathodenmaterial im

Kreislauf und sorgen durch ihre spiralige Ausbildung für eine weitgehende thermische Entkoppelung des oberen vom mittleren Temperaturniveau. Eine Austauschmembran 13 separiert die als Entladeprodukte gebildeten Natriumpolysulfide vom zähflüssigen Schwefel.

Die thermische Entkoppelung der verschiedenen Temperaturniveaus - diese sind etwa anzusetzen bei

$100°C \leq T \leq 200°C$ für den Na-Vorratstank

$200°C \leq T \leq 300°C$ für den S-, $Na_2S_x$-Vorratstank,

$250°C \leq T \leq 350°C$ für das Reaktionsaggregat -

erstreckt sich auch auf die elektrischen Ableitungen, so auf den Kathoden-Ableiter 14 und den Anodenableiter 15.

Das Reaktionsaggregat 2 ist im wesentlichen identisch mit einem als Reaktionskammer ausgebildeten Festelektrolytkörper, der vollständig aus ionenleitendem Material gefertigt ist. Ein solches Material ist beispielsweise $\beta$-$Al_2O_3$ oder ein Mischkristall der allgemeinen Formel

$$Na_{1+x}M_{2-1/3x+y}Si_xZ_{3-x}O_{12-2/3x+2y}$$

in der M eines der Übergangsmetalle der IV. Gruppe des Periodensystems, Zr, Ti, Hf oder Mischungen davon, Z eines der Elemente der V. Gruppe des Periodensystems, P, Sb, Bi, V, Nb, Ta oder Mischungen davon und

x eine Zahl von 0,01 bis 3,

y eine Zahl von 0 bis 0,5

bedeuten. Das Problem einer Behälterkorrosion ist auf diese Weise ausgeschlossen.

Eine besonders praktische, einem Hohlblockziegel vergleichbare Ausführungsform zeigt Figur 2 mit dem Festelektrolytkörper 16.

Sein Inneres ist durch eine Parallelschar flacher Kanäle mit sehr dünnen Zwischenwänden aufgelöst, welche in alternierender Folge die Kathodenräume 3 und die Anodenräume 4 bilden. Die Anodenräume 4 mit ihren Zuführungsöffnungen 17 für das schmelzflüssige Na sind einseitig geschlossen, die Kathodenräume hingegen über spaltförmige Durchbrüche 18 auf der Ober- und Unterseite des Keramikkörpers durchgehend geöffnet. Die sehr dünnen Zwischenwände 19 stellen dabei einen Festelektrolyten mit extrem hoher Leitfähigkeit dar.

Mit Rücksicht auf die mit dem Betriebszustand der Zelle wechselnden Viskositätseigenschaften der S-Masse sind die Kathodenräume breiter als die Anodenräume dimensioniert. Außer einer Graphitfilzeinlage (nicht dargestellt) enthalten die Kathodenräume jeweils einen Stromableiter 20 aus Molybdän. Diese Stromableiter können an eine mit keramischer Isolierung 21 versehene Sammelleitung 22 aus Kupfer angeschlossen werden.

Der Festelektrolytkörper wird durch Anschlußkappen für die Na-Zuführung und für die S- Zu- bzw. Abführung (nicht dargestellt) sowie durch die notwendigen elektrischen Verkabelungen zum kompletten Reaktionsaggregat vervollständigt. Die Anschlußkappen können z.B. aus $\alpha$-$Al_2O_3$ als Formkörper hergestellt und mittels Glaslot mit dem Keramikkörper verbunden werden.

Die Berechnung eines solchen Aggregats wurde mit den nachfolgenden Daten durchgeführt.

Aggregat-Außenmaße = 4,1 cm x 8 cm x 34 cm = 1100 $cm^3$
5 S-Kanäle mit 0,5 cm Dicke: 125 $cm^3$ Kammer-Volumen
6 Na-Kanäle mit 0,16 cm Dicke: 41 $cm^3$ " "
12 Wände mit 0,05 cm Dicke

Das aktive Gesamtvolumen beträgt somit 870 $cm^3$ und die aktive Gesamtaustauschfläche 2500 $cm^2$. Mit dem vorerwähnten Misch-

kristallmaterial erhält man auf der Grundlage eines spezifischen Leitwerts $\sigma_{300°C} = 0{,}2\Omega^{-1}cm^{-1}$ einen Gesamtwiderstand von $0{,}1m\Omega$.

Bei Belastung mit einer mittleren Stromdichte von 0,1 $A/cm^2$ ergibt sich ein Gesamtstrom von 250 A. Eine 2-stündige Betriebsdauer bei einer Spannung von 2 V macht einen Volumenvorrat von je 1/2 l Na und S erforderlich, wobei pro Sekunde im Mittel 60 mg Na und 120 mg S umgesetzt werden.

Die Joule'sche Verlustleistung von etwa 50 W reicht im Mittel aus, die vorgegebenen Reaktionsmengen um die Temperaturdifferenz von etwa 200°C aufzuheizen.

TABELLE 1

Die physikalischen Eigenschaften von geschmolzenem Natrium, Schwefel und der Natrium-Polysulfide.

| | | $S_8$ | $Na_2S_5$ | $Na_2S_4$ | $Na_2S_3$ | Na |
|---|---|---|---|---|---|---|
| Schmelzpunkt [°C] | | 113 ~ 120 | 185 ~ 298 | 255 ~ 300 | 224 ~ 320 | 98 |
| el. Widerstand [Ωcm] | 300°C<br>350°C | $5 \times 10^7$<br>$1,1 \times 10^7$ | 4,5<br>2,6 | 3,6<br>2,1 | 2,4<br>1,5 | $13,1 \times 10^{-6}$ bei 200°C |
| Viskosität [P] | 300°C<br>350°C | 22,0<br>4,5 | 0,51<br>0,19 | 0,39<br>0,18 | 0,38<br>0,18 | $7 \times 10^{-3}$ bei 100°C<br>$4,5 \times 10^{-3}$ bei 200°C |
| Dichte [$g\ cm^{-3}$] | 300°C<br>350°C | 1,698<br>1,669 | 1,898<br>1,862 | 1,917<br>1,886 | 1,902<br>1,874 | 0,927 bei 100°C<br>0,909 bei 200°C |
| Oberflächen-spannung [$mNm^{-1}$] | 300°C<br>350°C | 47,5<br>43,9 | 123,7<br>120,4 | 130,7<br>128,0 | 175,4<br>172,4 | |
| spez. Wärme [$kcal\ kg^{-}\ grd^{-1}$] | 200°C | 0,331 | | | | 0,331 bei 100°C<br>0,32 bei 200°C |
| Wärmeleitfähigkeit [$Wcm^{-1}\ grd^{-1}$] | 200°C | $1,5 \cdot 10^{-3}$ | | | | 0,806 bei 100°C<br>0,815 bei 200°C |

## Patentansprüche

1. Elektrochemische Sekundärzelle mit flüssiger Natriumanode und flüssiger Schwefelkathode, die in einer Mehrzahl von parallelgeschalteten Anoden- und Kathodenräumen in einem Körper aus einem keramischen ionenleitenden Festelektrolytmaterial angeordnet sind, dadurch gekennzeichnet, daß der Festelektrolytkörper (2, 16) aus untereinander versinterten profilierten Keramikplatten besteht, die parallel verlaufende Kanäle (3,4) mit dünnen Zwischenwänden (19) bilden, wobei die Anodenräume (3) am oberen Ende offen und am gegenseitigen Ende geschlossen sind, und die oberen Enden mit Natriumvorrat (7) in Verbindung stehen, und wobei die Kathodenräume (4) am oberen und unteren Ende offen sind und mit einem Vorrat (5) aus Schwefel und den Reaktionsprodukten der Zelle in Verbindung stehen, und daß in die Kathodenräume metallische (20) Ableiter eingelassen sind.

2. Elektrochemische Sekundärzelle nach Anspruch 1, dadurch gekennzeichnet, daß sie einen Natriumvorratstank (7) mit einem Temperaturniveau von ca. 100 - 200°C, einen Vorratstank (5) für Schwefel und Zellreaktionsprodukte ($Na_2S_x$) mit einem Temperaturniveau von ca. 200 - 300°C und einen Festelektrolytkörper (2, 16) mit einem Temperaturniveau von ca. 250 - 350°C besitzt und daß die unterschiedlichen Temperaturniveaus durch Verzögerungsleitungen (8, 10, 11, 12) thermisch entkoppelt sind.

3. Elektrochemische Sekundärzelle nach den Ansprüchen 1 und 2, dadurch gekennzeichnet, daß sie von einem die Wärmestrahlung möglichst vollständig reflektierenden Strahlungsschild (6) als äußerem Wärmebehälter umgeben sind.

4. Elektrochemische Sekundärzelle nach Anspruch 3, dadurch gekennzeichnet, daß innerhalb des Strahlungsschildes (6) ein Strahlungsschild (1) vorhanden ist, welcher als innerer Wärmebehälter den Festelektrolytkörper (2) und den Vorratstank (5) für Schwefel und Zellreaktionsprodukte ($Na_2S_X$) umgibt.

5. Elektrochemische Sekundärzelle nach den Ansprüchen 1 bis 4, dadurch gekennzeichnet, daß der innere Strahlungsschild (1) aus rostfreiem polierten Stahl und der äußere Strahlungsschild (6) aus goldplattiertem Kupfer besteht.

6. Elektrochemische Sekundärzelle nach den Ansprüchen 1 bis 5, dadurch gekennzeichnet, daß die Verzögerungsleitungen (8, 10, 11, 12) die jeweils von einem niederen zu einem nächsthöheren Temperaturniveau führenden Teilabschnitte (8, 10) der Natriumzuleitung (, 9, 10) sowie der Zuleitung für Schwefel sind.

7. Elektrochemische Sekundärzelle nach den Ansprüchen 1 bis 6, dadurch gekennzeichnet, daß der mittlere Leitungsabschnitt (9) der Natriumzuleitung (8, 9, 10) spiralig auf den inneren Strahlungsschild (1) aufgewickelt ist.

8. Elektrochemische Sekundärzelle nach den Ansprüchen 1 bis 7, dadurch gekennzeichnet, daß die Stromzuführung und die Stromableitung durch Übergangsleitungen (14, 15) zwischen dem inneren Strahlungsschild (1) und dem äußeren Strahlungsschild (6) thermisch entkoppelt sind.

1/2

Fig. 1

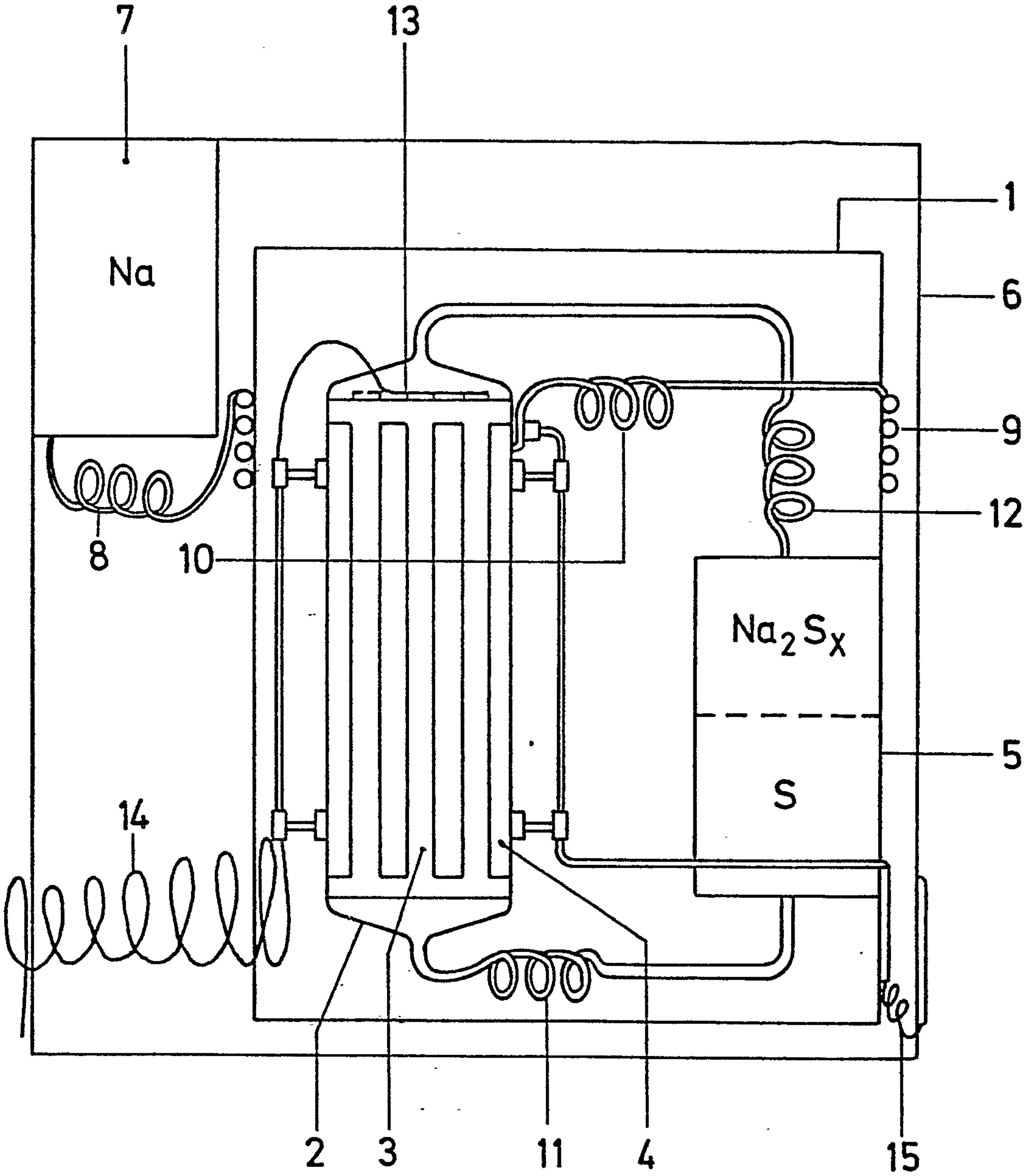

Fig. 2

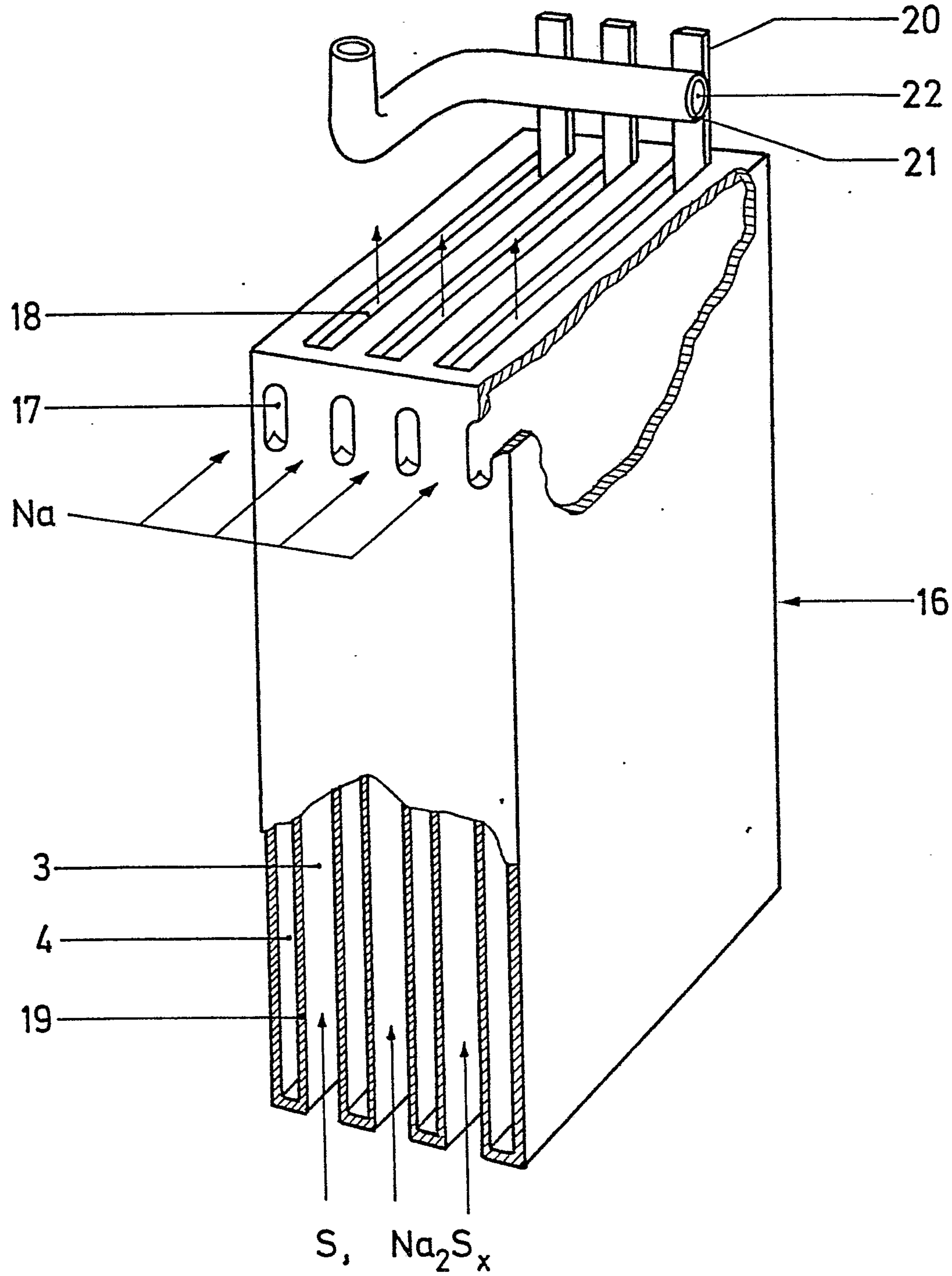

Europäisches Patentamt

# EUROPÄISCHER RECHERCHENBERICHT

Nummer der Anmeldung

EP 81 10 6059

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | US - A - 4 049 885 (STEPHEN PAUL MITOFF)<br>* Spalte 2, Zeilen 1-68; Spalte 3, Zeilen 1-57 *<br>-- | 1,2 |
| Y | FR - A - 2 269 794 (UNITED KINGDOM)<br>* Seite 7, Zeilen 30-38; Seite 8, Zeilen 1-26 *<br>-- | 1 |
| Y | FR - A - 1 560 882 (GENERAL ELECTRIC)<br>* Seite 5, Zeilen 37-43; Seite 6, Zeilen 1-41 *<br>-- | 2 |
| Y | DE - A - 2 819 026 (BROWN BOVERI)<br>* Seite 5, Absatz 3; Seite 6; Seite 13, Absatz 1 *<br>-- | 3 |
| A | US - A - 3 413 150 (JOSEPH T. KUMMER) | |
| A | FR - A - 2 331 889 (FORD FRANCE) | |
| DA | FR - A - 2 305 865 (BROWN BOVERI)<br>& DE - A - 2 513 649 | |
| A | US - A - 3 522 101 BERNARD S. BAKER) | |
| A | FR - A - 2 140 318 (C.G.E.)<br>----- | |

**KLASSIFIKATION DER ANMELDUNG (Int. Cl.³)**

H 01 M 10/39
10/50

**RECHERCHIERTE SACHGEBIETE (Int. Cl.³)**

H 01 M 10/39
10/50
8/18
8/22
12/08

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

✓ Der vorliegende Recherchenbericht wurde für alle Patentansprüche erstellt.

| Recherchenort | Abschlußdatum der Recherche | Prüfer |
|---|---|---|
| Den Haag | 16-02-1982 | DE VOS |